Europäisches Patentamt

European Patent Office

Office européen des brevets

(11) Veröffentlichungsnummer: **0 269 814 B1**

# EUROPÄISCHE PATENTSCHRIFT

(45) Veröffentlichungstag der Patentschrift: **08.05.91**

(51) Int. Cl.5: **H02B 11/167**

(21) Anmeldenummer: **87114870.6**

(22) Anmeldetag: **12.10.87**

(54) **Elektrische Schaltzelle.**

(30) Priorität: **24.10.86 DE 8628449 U**

(43) Veröffentlichungstag der Anmeldung:
**08.06.88 Patentblatt 88/23**

(45) Bekanntmachung des Hinweises auf die
Patenterteilung:
**08.05.91 Patentblatt 91/19**

(84) Benannte Vertragsstaaten:
**AT DE GB NL**

(56) Entgegenhaltungen:
**US-A- 2 921 998**

**SIEMENS, NACHTRAG JUNI 1980 ZUM KATA-
LOG HA 22, DE; "Hochspannungs-Anlagen
mit Innenraumgeräten, metallgekapselt
Schütz-Wagenanlage 8BD2 bis 7,2 kV"**

(73) Patentinhaber: **Siemens Aktiengesellschaft
Wittelsbacherplatz 2
W-8000 München 2(DE)**

(72) Erfinder: **Gronemann, Karl-Heinz, Dipl.-Ing
Talstrasse 13
W-6057 Dietzenbach(DE)**
Erfinder: **Poth, Rainer
Freiherr-von-Stein-Strasse 2
W-6368 Bad Vilbel 4(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektrische Schaltzelle nach dem Oberbegriff des Anspruches 1.

Es ist berteits eine elektrische Schaltzelle der im Oberbegriff des Anspruches 1 genannten Art bekannt, bei der die Welle aus der Zellentür herausragt. Der Fahrhebel ist sowohl in der Trennstellung, als auch in der Betriebsstellung des Schalterwagens mit der Welle vereinigbar oder von der Welle abnehmbar. Das Gleiche gilt für die der Schaltachse zugeordnete Handhabe. Diese ist sowohl in der Trennstellung, als auch in der Betriebsstellung des Schalterwagens mit der ihr zugeordneten Schaltachse vereinigbar, beziehungsweise von der Schaltachse abziehbar. Eine Besonderheit besteht noch darin, daß die Welle in der Zelle in eine Kulissenführung eingreift. Der Eingriff ist so gestaltet, daß bei einem durch den Fahrhebel erzeugten Drehen der Welle der Schalterwagen in seine beiden Positionen in der Zelle fahrbar ist, sofern es die Verriegelung gestattet. Die Verriegelung ist so ausgebildet, daB der Schalterwagen bei eingeschaltetem Erdungsschalter nicht aus der Trennstellung in die Betriebsstellung fahrbar ist und daB der Erdungsschalter nicht eingeschaltet werden kann, wenn sich der Schalterwagen in der Betriebsstellung oder in einer Zwischenstellung befindet. (Siemens Hochspannungsanlagen mit Innenraumgeräten, metallgekapselte Schütz-Wagen-Anlagen 8 BD2 bis 7,5 KV, Nachtrag Juni 1980 zum Katalog HA22).

Aufgabe der Erfindung ist es, die elektrische Schaltzelle der im Oberbegriff des Anspruches 1 genannten Art so auszubilden, daß der Fahrhebel bei eingeschaltetem Erdungsschalter nicht mit der Welle vereinigbar ist. Andererseits soll die Handhabe nicht mit der Schaltachse vereinigbar sein, wenn sich der Schalterwagen in der Betriebsstellung oder zwischen der Betriebsstellung und der Trennstellung befindet. Eine Vereinigung der Handhabe mit der Schaltachse soll nur in der Trennstellung des Schalterwagens möglich sein.

Die gestellte Aufgabe wird erfindungsgemäß durch die im kennzeichnenden Teil des Anspruches 1 angegebene Ausbildung gelöst.

Eine zweckmäßoge Weiterbildung des Erfindungsgegenstandes ist im Anspruch 2 angegeben.

Ein Ausführungsbeispiel der Erfindung ist in der Zeichnung rein schematisch dargestellt. Es zeigen:
Fig. 1 eine Rückansicht einer Zellentür
Fig. 2 einen Schnitt nach Linie II-II in Fig. 1
Fig. 3 einen Schnitt nach Linie III-III in Fig. 2.

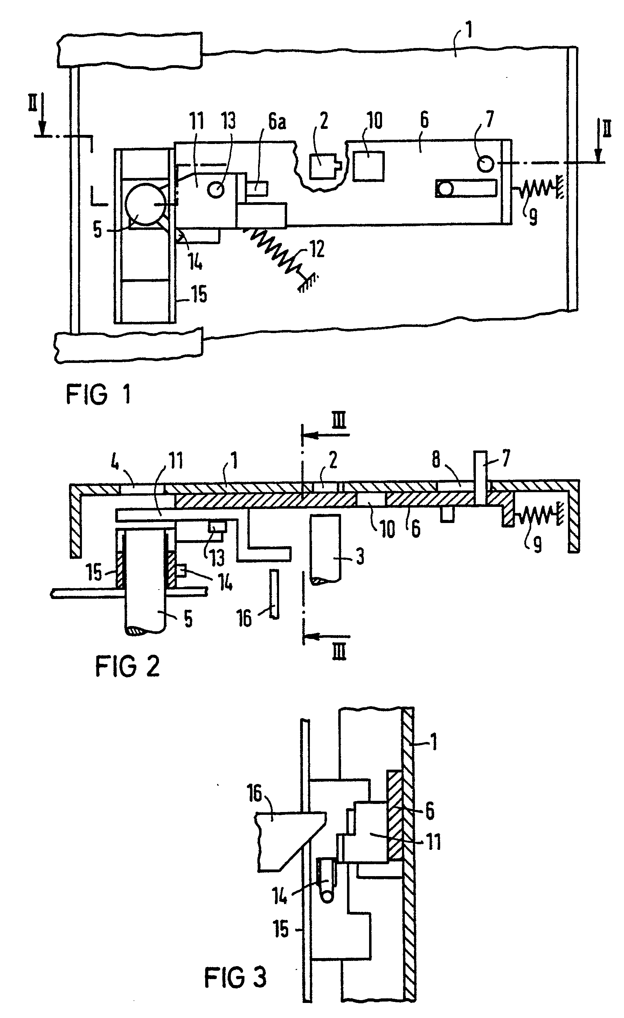

In der Zeichnung ist mit 1 eine Zellentür einer im übrigen nicht dargestellten elektrischen Schaltzelle bezeichnet. Die Zellentür 1 enthält eine erste Ausnehmung 2 (Fig. 1 und 2). Bei ausgeschaltetem Erdungsschalter ist ein nicht dargestellter Fahrhebel durch die erste Ausnehmung 2 hindurch formschlüssig mit einer Welle 3 (Fig. 2) vereinigbar. Die Welle 3 ist Teil eines nicht gezeigten Schalterwagens. Der Fahrhebel und die Welle 3 sind so ausgebildet, daß der Schalterwagen nach der Vereinigung des Fahrhebels mit der Welle 3 durch axialen Druck auf den Fahrhebel in seine Betriebsstellung und durch axialen Zug auf den Fahrhebel aus der Betriebsstellung in seine Trennstellung fahrbar ist (nicht dargestellt).

Die Zellentür 1 weist noch eine zweite Ausnehmung 4 auf, hinter der eine Schaltachse 5 des im übrigen nicht dargestellten Erdungsschalters liegt.

Mit einer Verriegelungsvorrichtung ist sichergestellt, daß die Welle 3 mit dem Fahrhebel nicht vereinigt werden kann, wenn der Erdungsschalter eingeschaltet ist. Ferner ist mit der Verriegelungsvorrichtung sichergestellt, daß die Schaltachse 5 nicht mit der Handhabe vereinigt werden kann, wenn sich der Schalterwagen in seiner Betriebsstellung oder in einer Zwischenstellung zwischen der Betriebsstellung und der Trennstellung befindet.

Teil der Verriegelungsvorrichtung ist ein Schieber 6, der am Rücken der Zellentür 1 angeordnet ist. Der Schieber 6 trägt einen Betätigungsbolzen 7, der ein Langloch 8 der Zellantür 1 durchgreift. Ferner hält eine Feder 9 den Schieber 6 in eine Sperrlage, in der der Schieber 6 die erste Ausnehmung 2 der Zellentür 1 versperrt, so daß der Fahrhebel nicht auf die Welle 3 aufsteckbar ist. Der Schieber 6 ist außerdem mit einer Durchgangsausnehmung 10 versehen. Abhängig von der Stellung des Erdungsschalters ist der Schieber 6, gegen die Kraft der Feder 9, in eine nicht dargestellte Lage verschiebbar, in der seine Durchgangsausnehmung 10 mit der ersten Ausnehmung 2 der Zellentür 1 fluchtet, so daß der Fahrhebel auf die Welle 3 aufsteckbar ist.

Die Zellentür 1 trägt eine als einarmiger Hebel ausgebildete Falle 11. Die Falle 11 wird in der Darstellung (Fig. 1) durch eine Zugfeder 12 in einer Lage gehalten, in der sie die zweite Ausnehmung 4 der Zellentür 1 sperrt. Die Falle 11 ist durch den Schalterwagen um einen Bolzen 13 so schwenkbar, daß sie die zweite Ausnehmung 4 erst dann völlig frei gibt, wenn der Schalterwagen sich in seiner Trennstellung befindet. Der Bolzen 13 ist in der Zellentür 1 befestigt und durchgreift ein Langloch 6a des Schiebers 6.

Die Schaltachse 5 trägt einen Stift 14, der in ein Schiebeglied 15 eingreift, das in der Schaltzelle geführt ist. Das Schiebeglied 15 bildet einen Anschlag, der im Weg des Schiebers 6 liegt, wenn der Erdungsschalter eingeschaltet ist. Das Schiebeglied 15 gibt den Weg des Schiebers 6 frei, wenn der Erdungsschalter ausgeschaltet ist.

In nicht gezeigter Weise ist das Schiebeglied 15 zweckmäßig mit einem Stellungsanzeiger ausgerüstet. Die Zellentür 1 ist in diesem Falle mit einer weiteren Ausnehmung versehen, durch die die jeweilige Stellung des Stellungsanzeigers sichtbar ist.

Wirkungsweise:

Die in der Zeichnung dargestellte Lage aller Teile möge die Ausgangslage sein, in der sich der Schalterwagen in seiner Betriebsstellung befindet. Der Erdungsschalter ist ausgeschaltet. Die Falle 11 versperrt die zweite Ausnehmung 4, so daß die Handhabe nicht auf die Schaltachse aufsteckbar ist. Der Erdungsschalter kann somit nicht eingeschaltet werden.

Der Schieber 6 ist mittels des Betätigungsbolzens 7 verschiebbar, da das Schiebeglied 15 außerhalb des Schiebeweges des Schiebers 6 liegt.

Nach erfolgter Verschiebung des Schiebers 6 fluchtet seine Durchgangsausnehmung 1o mit der ersten Ausnehmung 2 der Zellentür 1. Der Fahrhebel kann nunmehr auf die Welle 3 aufgesteckt werden. Mit dem Fahrhebel ist der Schalterwagen sodann aus seiner Betriebsstellung in seine Trennstellung ziehbar.

Im Zuge der Fahrbewegung des Schalterwagens kippt ein Ausheber 16 des Schalterwagens die Falle 11 um ihren Bolzen 13. Die Falle 11 wird derart gekippt, daß sie erst in der Trennstellung des Schalterwagens die zweite Ausnehmung 4 der Zellentür 1 völlig freigibt. Nunmehr kann die Handhabe auf die Schaltachse 5 aufgesteckt und der Erdungsschalter eingeschaltet werden. Dabei wird das Schiebeglied 15 durch den Stift 14 in den Weg des Schiebers 6 bewegt, der die erste Ausnehmung 2 gegen das Durchstecken des Fahrhebels sperrt. Der Schalterwagen kann somit nicht aus seiner Trennstellung gefahren werden.

Mit dem Ausschalten des Erdungsschalters wird das Schiebeglied 15 aus dem Weg des Schiebers 6 geschoben. Dieser kann jetzt mit dem Bolzen 7 verschoben werden, so daß seine Durchgangsausnehmung 1o wieder mit der ersten Ausnehmung 2 der Zellentür 1 fluchtet. Jetzt kann der Schalterwagen mit dem Fahrhebel in seine Betriebsstellung zurück gefahren werden.

## Ansprüche

1.   Elektrische Schaltzelle, mit den Merkmalen:
     a) eine erste Ausnehmung (2) in einer Zellentür (1) läßt eine Verbindung zwischen einer Welle (3) und einem auf die Welle (3) aufsteckbaren Fahrhebel zu. mit dem ein hinter der Zellentür (1) befindlicher Schalterwagen aus einer Trennstellung in eine Betriebsstellung und umgekehrt fahrbar ist;
     b) die Zellentür (1) weist eine zweite Ausnehmung (4) auf, hinter der eine mit einer aufsteckbaren Handhabe betätigbare Schaltachse (5) eines Erdungsschalters liegt;
     c) die Welle (3) und die Schaltachse (5) sind gegeneinander mit einer Verriegelungsvorrichtung verriegelbar;
     **gekennzeichnet durch** die Merkmale:
     d) die Verriegelungsvorrichtung weist einen Schieber (6) auf, der am Rücken der Zellentür (1) angeordnet ist, einen ein Langloch (8) der Zellentür (1) durchgreifenden Betätigungsbolzen (7) trägt, unter der Kraft einer Feder (9) in einer Sperrlage gehalten ist, eine Durchgangsausnehmung (1o) aufweist und abhängig von der Stellung des Erdungsschalters gegen die Kraft der Feder (9) in eine Lage verschiebbar ist, in der seine Durchgangsausnehmung (1o) mit der ersten Ausnehmung (2) der Zellentür (1) fluchtet;
     e) die Zellentür (1) trägt eine Falle (11), die in der Betriebsstellung des Schalterwagens die zweite Ausnehmung (4) der Zellentür (1) sperrt und durch einen Ausheber (16) des Schalterwagens, bei dessen Bewegung aus der Betriebsstellung in die Trennstellung, zur Freigabe der zweiten Ausnehmung (4) der Zellentür (1), anhebbar ist;
     f) die Schaltachse (5) greift mit einem Stift (14) in ein in der Zelle geführtes Schiebeglied (15) ein, das einen Anschlag bildet, der im Weg des Schiebers (6) liegt, wenn der Erdungsschalter eingeschaltet und der außerhalb des Weges des Schiebers (6) liegt, wenn der Erdungsschalter ausgeschaltet ist.

2.   Schaltzelle nach Anspruch 1, **dadurch gekennzeichnet,** daß das Schiebeglied (6) einen Stellungsanzeiger trägt und daß die Zellentür (1) eine weitere Ausnehmung aufweist, durch die die jeweilige Stellung des Stellungsanzeigers sichtbar ist.

## Claims

1.   An electrical switchgear cell with the features:
     a) a first recess (2) in a cell door (1) allows a connection between a shaft (3) and a travel lever able to be mounted on the shaft (3), with which a switch truck located behind the cell door (1) can be driven from a disconnected position into its operational position and vice versa;

b) the cell door (1) has a second recess (4) behind which lies a switching axis (5) of an earthing switch able to be activated with a mountable handle;

c) the shaft (3) and the switching axis (5) are able to be locked against each other with a locking device;

characterised by the features:

d) the locking device has a slide (6) which is arranged at the rear of the cell door (1), carries an activating bolt (7) penetrating an oblong hole (8) of the cell door (1), is held by the force of a spring (9) in a blocking position, has a passage recess (10), and is displaceable, in dependence on the position of the earthing switch, against the force of the spring (9), into a position in which its passage recess (10) aligns with the first recess (2) of the cell door (1);

e) the cell door (1) carries a latch (11) which, in the operational position of the switch truck, blocks the second recess (4) of the cell door (1) and through a lifter (16) of the switch truck, is able to be lifted for releasing the second recess (4) of the cell door (1) during the movement of said lifter, from the operational position into the disconnected position;

f) the switching axis (5) engages with a pin (14) into a slide member (15) guided in the cell, which forms a stop, which lies in the path of the slide (6), if the earthing switch is connected and which lies outside the path of the slide (6) if the earthing switch is disconnected.

2. A switchgear cell according to claim 1, characterised in that the slide member (6) carries a position indicator and in that the cell door (1) has a further recess, through which the respective position of the position indicator is visible.

## Revendications

1. Cellule électrique de coupure présentant les caractéristiques suivantes :

a) une première ouverture (2) ménagée dans une porte (1) de la cellule permet l'établissement d'une liaison entre un arbre (3) et un levier de déplacement, qui peut être emmanché sur l'arbre (3) et à l'aide duquel un coulisseau porte-interrupteur, situé en arrière de la porte (1) de la cellule, peut être amené depuis une position de coupure dans une position de service et inversement;

b) la porte (1) de la cellule possède une seconde ouverture (4), située en arrière d'un axe de commutation (5), qui peut être actionné à l'aide d'une poignée enfichable, d'un interrupteur de mise à la terre;

c) l'arbre (3) et l'axe de commutation (5) peuvent être verrouillés l'un par rapport à l'autre à l'aide d'un dispositif de verrouillage;

caractérisée par les particularités suivantes :

d) le dispositif de verrouillage possède un poussoir (6), qui est monté sur le côté arrière de la porte (1) de la cellule, qui porte un téton d'actionnement (7) pénétrant dans un trou allongé (8) de la porte (1) de la cellule, qui est maintenu par la force d'un ressort (9) dans une position de blocage, qui possède une ouverture de passage (10) et qui peut être amené à l'encontre de la force du ressort (9), en fonction de la position de l'interrupteur de mise à la terre, dans une position dans laquelle son ouverture de passage (10) est alignée avec la première ouverture (2) de la porte (1) de la cellule;

e) la porte (1) de la cellule comporte un pêne demi-tour (11), qui, dans la position de service du coulisseau porte-interrupteur, bloque la seconde ouverture (4) de la porte (1) de la cellule et peut être soulevé par un levier de soulèvement (16) du chariot porte-interrupteur, lors du passage de ce dernier de la position de service à la position de coupure, pour libérer la seconde ouverture (4) de la porte (1) de la cellule;

f) l'axe de commutation (5) s'engage par un téton (14) dans un élément coulissant (15), qui est guidé dans la cellule et forme une butée située sur le trajet du coulisseau (6), lorsque l'interrupteur de mise à la terre est fermé, et qui est situé à l'extérieur du trajet du coulisseau (6), lorsque l'interrupteur de mise à la terre est ouvert.

2. Cellule de coupure suivant la revendication 1, caractérisée par le fait que l'organe coulissant (6) porte un indicateur de position et que la porte (1) de la cellule possède une autre ouverture, par laquelle on peut voir la position respective de l'indicateur de position.

FIG 1

FIG 2

FIG 3